# EUROPEAN PATENT APPLICATION

(11) **EP 1 056 291 A2**
(43) Date of publication of application: **29.11.2000**
(21) Application number: 00500095.5
(22) Date of filing: 19.05.2000
(51) Int. Cl.: H04N 7/16

(54) **Multifunctional remote control unit for digital television**

(30) Priority: 21.05.1999 ES 9901098
(71) Applicant: Telefonica, S.A., 28013 Madrid (ES)
(72) Inventor: Hernandez Munos, José Manuel, 28020 Madrid (ES)
(74) Representative: Carpintero Lopez, Francisco

(57) **Abstract**

The multifunctional remote control unit for digital television incorporates on or more connectors for reading/writing of smart cards, chip or electronic cards, and heads for reading/writing of magnetic strip cards; access to all or some of the functions of the remote control or of the units controlled by it may be conditioned by the insertion of one or more smart cards or magnetic strip cards, and/or by the authentication of the authorise user by entering the correct code, using the control unit keyboard. It further incorporates an infrared emitter and receiver with the electronic circuitry required for interconnecting the infrared emitter and receiver, in order to function as an active retransmitter of the instructions which one of the devices may send to another.

## Description

### OBJECT OF THE INVENTION

The present invention relates to a remote control unit for digital television which, in addition to the specific television remote control functions, includes further functions by means of smart card readers and/or magnetic strip card readers.

More specifically, the multifunction remote control unit allows to make payments with cash cards and/or credit or debit bank cards, recharging electronic purses, reading data included in smart cards (such as GSM mobile telephony cards, medical records, etc.), presenting them on a display of the control itself or sending them to other devices which it controls.

Additionally, the present invention is provided with an infrared receiver in order to interconnect an infrared emitter and receiver. That is, it provides communication between units which are normally stacked on each other.

The scope of application of the present invention lies within the field of audiovisual systems.

### BACKGROUND OF THE INVENTION

Currently remote control devices exist in the market which in addition to performing their proper functions of data transmission with the television include means for reading smart cards.

The present invention considers a wider range of functions. It allows not only to read smart cards in order to authorise the functioning of devices and channels controlled by it, but in addition allows to perform transactions by means of smart cards, allowing to write information on them.

It allows use of the control as a means of recharging prepaid cards, also allowing displaying the amount of the transaction, the remaining balance, etc.

It allows to perform transactions, purchases and payments from the remote control using the data received by it from the decoder, the television set or another unit. It also considers the possibility of this data being supplied by the user through the keyboard, using codes included in advertising or associated to it (this opens up the possibilities to products advertised through channels other than television, such as magazines, radio, street signs, etc.).

It allows to establish a radioelectric connection to a public or private communications network to carry out transactions (at this time there are devices which perform this kind of operation, but only using infrared, not radiofrequencies, and only for magnetic cards).

It allows to set the user profile based on the information contained in the cards (there are other devices which also filter the user type but based on information contained in the control set itself and not in the card, the latter solution providing greater versatility).

By means of a control mechanism which uses the channel programming information, it further allows the decoder or TV set to act on a recorder or another massive storage unit, relying on an active or passive infrared transmitter not connected to them by cable.

It allows using the control unit as an active or passive transmitter of data contained in an electronic programming guide, from the decoder or the TV set to the recording device. The novelty lies in that this function is performed from a household appliance (a decoder or a TV set).

The control set includes a key for the specific function of recording on the recorder a program chosen from an electronic programming guide.

It may read mobile telephony smart cards to display their contents, such as the phone book. These contents may be sent to another device, such as the television set, as well as employed as a user identification method in order, for example, to carry out transactions.

### BRIEF DESCRIPTION OF THE DRAWINGS

Further characteristics and advantages of the present invention will become apparent in view of the detailed description which follows of a preferred embodiment of the invention, made with reference to the accompanying drawings and solely for purposes of illustration and not meant as a definition of the limits of the invention, in which:

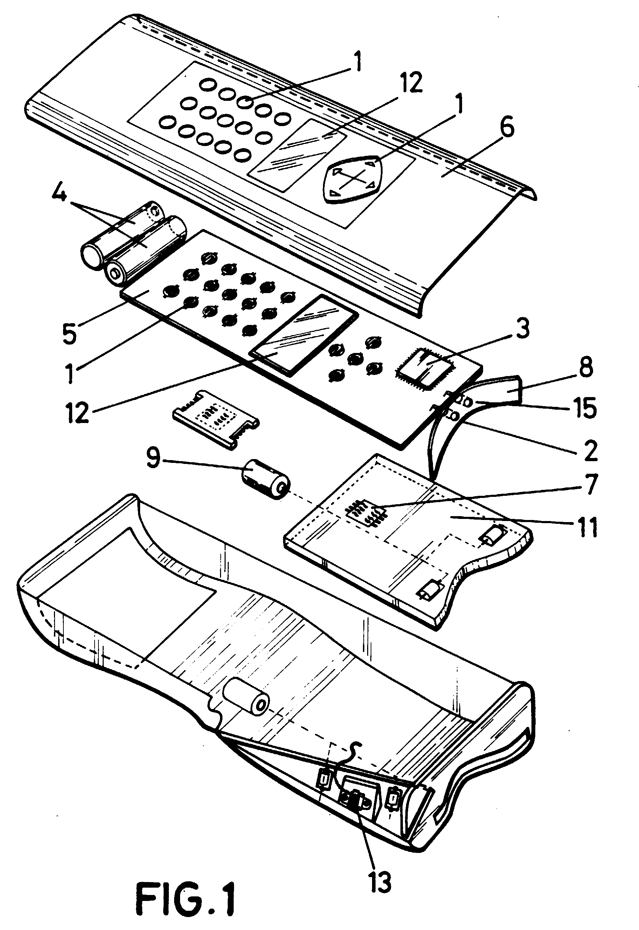

Figure 1, or the single figure, shows the identification of the components elements of the multifunctional remote control for digital television.

### DESCRIPTION OF A PREFERRED EMBODIMENT

In order to carry out the description of the preferred embodiment, constant reference is made to the figures of the drawings, in which Figure 1 is shown a remote control unit for controlling other devices, which in addition to the usual elements (keyboard (1), infrared emitter (2), processor (3), electrical power supply (4), printed circuit board (5) for interconnecting the elements and case (6)), one or more smart card reader(s) (7) and a magnetic strip card reader. Access to part or all functions of said control unit and/or the devices or units controlled by it is conditioned by the insertion of one or more smart cards, and/or for certain functions by the authentication of the authorised user by introducing the corresponding code, for which keyboard (1) of the control is used. Payments resulting from purchase of goods and services, commercial transactions and access to banking services is made possible by reading bank cards with a magnetic strip or smart cards.

It further incorporates an infrared receiver (15), and the electronic circuitry required to interconnect the infrared emitter and receiver, whether directly or via further circuits of the control set processing unit, in order to serve as an active transmitter in real or delayed time of the instructions which one device may send to another.

The control unit may also be provided with a passive reflector, in combination one integrated in the control unit (8) itself or based on a Fresnel lens together with a flat reflector with adhesive substances or materials added on one of its sides in order to fasten it to any surface, so that the resulting set may be placed on walls or ceilings without resulting aesthetically unpleasant. Said passive infrared optical reflector allows to retransmit instructions or data originating in one of the devices controlled by the control unit, unaltered, to another device. Specifically, it allows to program a user's VCR in order to record an event, using programming data obtained from the Electronic Program Guide (EPG), such as the start and finish times for said event.

The remote control unit may receive and send information from / to the devices which it controls in an encoded or transparent manner.

To obtain automation of the card insertion and extraction process in the preferred embodiment of the invention, a small electric motor (9), or a kinetic or friction element, is provided, which drives one or more rollers (10) made from a anti-slip material in order to aid in insertion of cards by placing them in the position required for the logical connection, or to provide reading of the data contained in the magnetic strip of the cards. For this reason, the remote control unit is provided with a button for automatically ejecting the card(s).

Additionally, the remote control is provided with guides (11) to simplify the displacement of cards along the most convenient path. It further is provided with the slots and openings required for inserting the cards, and/or to be used as a guide in the reading process. For this purpose it is provided with an inertia based or electronic system which ensures that when manually moving magnetic cards, the magnetic strip of the card moves at an approximately constant rate on the electromagnetic reader head (13).

This description is not continued further in the understanding that any expert in the field would understand the scope of the invention and the advantages derived thereof, as well as to develop and reduce to practice its object.

However, it must be considered that the invention has been described according to a preferred embodiment of the same, so that it is subject to alterations without this affecting the operation of said invention, such alterations particularly affecting the shape, size, and/or construction materials.

## Claims

1. Multifunctional remote control unit for digital television, for controlling other devices, which provided with usual elements such as keyboard (1), infrared emitter (2), processor (3), electrical power supply (4), printed circuit board (5) for interconnecting the various elements and case (6), is characterised in that it is provided simultaneously with means for reading smart cards and magnetic strip cards, with a device for encoding part of the data obtained from said cards, and transmitting it to the device(s) which it may control, and capable of showing the information on a display (12) as long as the code entered using keyboard (1) of the control unit itself is correct for the authentication process, such that operations may be performed such as paying for goods and services, commercial transactions and access to banking services.

2. Multifunctional remote control unit for digital television, as claimed in claim 1, characterised in that it is provided with a mechanism for automating the insertion of cards, comprising a small electric motor (9) which drives one or more rollers (10) made from an anti-slip material in order to aid in or perform the insertion of cards so that they are placed in the position required for their logical connection, in order to perform the exchange of data, or to enable processing data from the magnetic strip; and in that it is further provided with an inertia based system meant to ensure that when magnetic strip cards are manually moved, the motion of the magnetic strip on the electromagnetic reading head occurs at an approximately constant speed.

3. Multifunctional remote control unit for digital television, as claimed in claim 1, characterised in that it can also be used to perform payments using purse cards and/or bank cards, whether debit or credit.

4. Multifunctional remote control unit for digital television, as claimed in claim 1, further characterised in that it may be used as part of the conditional access system for paid television, wherein the card which provides access to contents is inserted in the remote control unit instead of in the decoder unit.

5. Multifunctional remote control unit for digital television, as claimed in claim 1, characterised in that it also incorporates an infrared receiver and the required electronic circuitry to interconnect the infrared emitter and receiver, whether directly or by other intermediate circuits or the control's central processing unit, in order to function as an active retrasnmitter, in real time or delayed, of the instructions which one device may send to others, with or without alterations, so that although said units may be stacked on top o each other communication by infrared radiation is possible.

6. Multifunctional remote control unit for digital television, as claimed in claim 1, characterised in that it incorporates a passive optical reflector (8) comprising a Fresnel lens glued to a flat reflective element, which has adhesive substances on one side in order to be attached onto any surface, and which may be employed for retransmission of instructions or data originating in one of the devices controlled by the remote control unit, unchanged, to another device.
